(19) Europäisches Patentamt
European Patent Office
Office européen des brevets

(11) Veröffentlichungsnummer: **0 033 297**
**B1**

(12) # EUROPÄISCHE PATENTSCHRIFT

(45) Veröffentlichungstag der Patentschrift: **18.05.83**

(51) Int. Cl.[3]: **C 09 B 67/48,** C 09 B 29/085, C 09 B 67/10

(21) Anmeldenummer: **81810002.6**

(22) Anmeldetag: **05.01.81**

(54) **Färbestabiler Dispersionsfarbstoff und dessen Verwendung zum Färben und Bedrucken synthetischer und halbsynthetischer Fasermaterialien.**

(30) Priorität: **11.01.80 CH 212/80**

(43) Veröffentlichungstag der Anmeldung: **05.08.81 Patentblatt 81/31**

(45) Bekanntmachung des Hinweises auf die Patenterteilung: **18.05.83 Patentblatt 83/20**

(84) Benannte Vertragsstaaten: **CH DE FR GB LI**

(56) Entgegenhaltungen:
**CH-A-561 756**
**DE-A-1 619 535**
**FR-A-2 292 745**
**US-A-2 007 382**

(73) Patentinhaber: **CIBA-GEIGY AG, Patentabteilung Postfach, CH-4002 Basel (CH)**

(72) Erfinder: **Eugster, Peter, Dr., Mattweg 96, CH-4144 Arlesheim (CH)**
Erfinder: **Koller, Stefan, Dr., Zelglistrasse, CH-4431 Ramlinsburg (CH)**

**EP 0 033 297 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Färbestabiler Dispersionsfarbstoff und dessen Verwendung zum Färben und Bedrucken synthetischer und halbsynthetischer Fasermaterialien

Die vorliegende Erfindung betrifft eine neue färbestabile kristallographische Modifikation des Azofarbstoffs der Formel

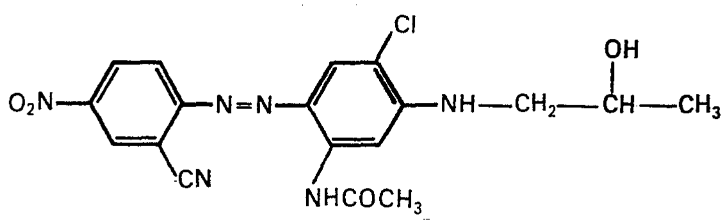

die durch das in Fig. 1 gezeigte, mit CuK-αl-Strahlung aufgenommene Röntgenbeugungsdiagramm mit den charakteristischen Reflexen und die aus dem Beugungsbild errechneten d-Werte der Netzebenenabstände charakterisiert ist, wobei im folgenden nur die Linien sehr starker (ss) und starker (s) relativer Intensität berücksichtigt sind.

d [Å]: 11.9 (s), 6.8 (ss), 4.71 (s), 4,17 (s), 3.60 (s), 3.49 (s), 3.44 (ss), 3.34 (ss), 3.21 (s).

Bekannt ist die kristallographisch amorphe Modifikation des Farbstoffes der vorstehend genannten Formel, mit einem Erweichungsbereich unterhalb von 90°C und dessen Verwendung zum Färben und Bedrucken von Textilmaterial, insbesondere von Polyesterfasermaterial.

Der Farbstoff kann nach dem aus der Schweizer Patentschrift 561 756 bekannten Verfahren durch Kuppeln von diazotiertem 2-Cyano-4-nitroanilin mit 1-[N-(β-Hydroxypropyl)-amino]-2-chlor-5-acetyl-amino-benzol hergestellt werden.

Die neue färbestabile Modifikation gemäss vorliegender Erfindung, im folgenden als α-Modifikation bezeichnet, wird erhalten, indem man den amorphen Farbstoff in wässriger Suspension, gegebenenfalls unter Zusatz eines anionischen Dispergators, während 1 bis 20 Stunden in der Weise auf Temperaturen zwischen 20 und 100°C erhitzt, dass die Farbstoffpartikel nicht schmelzen. Dabei geht man zweckmässig direkt von der wässrigen Kupplungssuspension des Azofarbstoffs aus.

Die Umwandlung des amorphen in den kristallinen Farbstoff lässt sich leicht durch die Aufnahme von Röntgenbeugungsspektren und die Bestimmung von Schmelzpunkten verfolgen. Vorteilhaft wird die Suspension des amorphen Farbstoffs langsam stufenweise auf 90 bis 100°C mit einem Haltepunkt bei 40 bis 60°C erhitzt, ohne dass dabei der Farbstoff schmilzt. Die Heizrate beträgt zweckmässig 0,1-1°C, vorzugsweise 0,4-0,7°C pro Minute und die Verweildauer am Haltepunkt bei 40-60°C, vorzugsweise 50°C beträgt 0,5 bis 2 Stunden. Im Bereich der Endtemperatur von 90-100°C wird die Suspension 0,5-5 Stunden gehalten. Dabei wandelt sich der amorphe Farbstoff vollständig in die kristalline α-Modifikation um, die sich nach Abkühlen der Suspension mühelos abfiltrieren lässt und einem bekannten Finish unterworfen wird.

Um zum Färben und Drucken technisch geeignete Farbstoffpräparate zu erhalten, kann die erfindungsgemässe α-Modifikation durch übliche mechanische Verfahren, gegebenenfalls in Gegenwart von Wasser und geeigneter Dispergiermittel und anderer üblicher Zusätze in hohe Feinverteilung übergeführt werden.

Für die gegebenenfalls vorzunehmende Feinverteilung eignen sich die üblichen Vorrichtungen, wie Mühlen beispielsweise Kugelmühlen, Schwingmühlen, Sandmühlen oder Kneter. Als Dispergiermittel kommen beispielsweise Kondensationsprodukte von ein- oder mehrkernigen aromatischen Verbindungen, wie Naphthalin, Naphthole, Phenole oder deren Sulfonsäuren, mit Formaldehyd oder anderen Substanzen, die mit aromatischen Ringen kondensieren können, wie Harnstoff, Äthylenoxid oder Isocyanate, gegebenenfalls unter Zusatz von Natriumsulfit, ferner Ligninsulfonate und nichtionische und anionische oberflächenaktive Verbindungen in Betracht.

Die in hohe Feinverteilung überführte neue Farbstoffmodifikation eignet sich besonders für die Herstellung von dispergatorarmen, lagerstabilen Flüssigformulierungen. Unter Verwendung der neuen kristallinen Farbstoffmodifikation hergestellte Formulierungen sind im Gegensatz zu entsprechenden, mit dem amorphen Farbstoff hergestellten, dünnflüssig, gut giesbar, nicht sedimentierend, dispers- und lagerstabil und eignen sich daher hervorragend für die Herstellung von Druckpasten z.B. zum Bedrucken von Polyestergewebe.

In den folgenden Beispielen beziehen sich Angaben über Teile und Prozente, sofern nicht anders vermerkt, auf das Gewicht. Das Röntgenbeugungsbild wurde mit CuK-αl-Strahlung ($\lambda$ = 1.5405 Å) aufgenommen. Als Eichsubstanz wurde α-Quarz verwendet. Dessen d-Werte sind aus a = 4.913 Å und c = 5.405 Å berechnet. Die relativen Linienintensitäten sind visuell geschätzt.

Beispiel 1

Die durch Kuppeln von 74 Teilen diazotiertem 2-Cyano-4-nitroanilin mit 95 Teilen 1-[N-(β-Hydroxypropyl)-amino]-2-chloro-5-acetylaminobenzol erhaltene Kupplungssuspension des amorphen Azofarbstoffs wird mit Lauge auf einen pH-Wert von 1,6-1,7 abgestumpft und zunächst bei Raumtemperatur über Nacht gerührt. Dann

erwärmt man die Suspension mit einer Heizrate von 0,5°C/Min. auf 50°C und hält die Temperatur für 1 Stunde konstant. Anschliessend steigert man die Temperatur mit gleicher Geschwindigkeit auf 95–100°C und rührt den Ansatz noch 2 Stunden bei dieser Temperatur. Schliesslich lässt man die Suspension auf 60–70°C abkühlen und filtriert den nunmehr kristallinen, in der α-Modifikation vorliegenden Farbstoff ab. Die Farbstoffkristalle, die sich gut filtrieren lassen, werden mit 50°C heissem Wasser auf der Nutsche neutral gewaschen und trockengesaugt. Der feuchte Nutschkuchen wird abschliessend bei 70–80°C im Vakuum getrocknet.

Smp.: 152–155°C unkorr.
UV: $\lambda_{max}^{MeOH}$ 515 nm (34.500).

Beispiel 2

400 Teile des nach Beispiel 1 hergestellten kristallinen Dispersionsfarbstoffs,
10 Teile eines sulfonierten, fraktionierten Kraft-Lignins mit einem Verhältnis von Kohlenstoff; organisch gebundenem Schwefel von 46:1, das zu 80% aus Molekülen mit einem Molekulargewicht zwischen 2000 und 30 000 besteht, sowie
20 Teile eines nichtionogenen Polykondensationsproduktes, bestehend aus 20% Polypropylenoxid und 80% Polyäthylenoxid mit einem Molekulargewicht von ca. 16 500,
werden in einem Dispergiermedium bestehend aus 398 Teilen Wasser, 170 Teilen 1,2-Propylenglykol und 2 Teilen des Konservierungsmittels 1-(3-Chlorallyl)-3,5,7-triazo-azonium-adamantanchlorid angerührt.

Die Dispersion wird in einer Rührwerksmühle mittels Zirkonoxid-Mahlkörpern so lange vermahlen, bis die Primärteilchengrösse des Farbstoffs bei der überwiegenden Mehrzahl der Teilchen unter 5 μ liegt. Das Mahlgut wird von den Mahlkörpern abgetrennt und entlüftet. Die Dispersion weist eine Viskosität von 120 cP auf. Durch Zusatz von 0,1–0,2 Gew.% Xanthangummi und mehrstündiges Rühren wird die Viskosität auf einen Wert zwischen 500 und 1000 cP erhöht. Der pH-Wert beträgt 9,4. Man erhält ein Farbstoffpräparat, welches dünnflüssig ist, sich gut filtrieren lässt und seine Viskosität und seinen Dispersionsgrad auch nach mehrwöchiger Lagerung bei 60°C oder nach mehrmonatiger Aufbewahrung bei wechselnden Raumtemperaturen nur unwesentlich verändert.

Das gleiche Ergebnis erhält man, wenn man die Dispersion in einer Perl- oder Sandmühle mahlt.

Die Zumischung dieses Farbstoffpräparats zu einer Polyacrylsäure-Druckverdickung ergibt eine Druckpaste, deren Viskosität auch nach 3 Monaten praktisch unverändert bleibt und die sich insbesondere für den Direktdruck auf Polyestergewebe eignet.

Beispiel 3

In 950 Teile einer mit Natronlauge auf pH = 6,8 gestellten 0,3%igen Lösung einer hochmolekularen Polyacrylsäure in destilliertem Wasser werden 50 Teile des gemäss Beispiel 2 erhaltenen roten Farbstoffpräparates eingerührt und gut homogenisiert. Es resultiert eine Druckpaste mit einer Viskosität von 33 000 cP (Brookfield-Viskosimeter RVT, Spindel 4, 6 U/Min. bei 20°C).

Mit dieser Druckpaste wird auf einer Rotationsfilmdruckmaschine ein Polyestergewebe oder Gewirke bedruckt. Anschliessend wird bei 100–140°C vorgetrocknet und das getrocknete Gewebe oder Gewirke im HT-Dampf während 8 Min. bei 180°C fixiert. Anstelle dieser Hochtemperatur-Dampfbehandlung kann auch eine Trokkenfixierung während einer Minute bei 200–210°C durchgeführt werden.

Nach der Fixierung wird die Textilbahn auf einer Haspelkufe oder Continue-Waschanlage nur kurz bei Temperaturen von 20–50°C nachgewaschen. Die minimale Menge an eingesetzter synthetischer Verdickung sowie der sehr geringe Anteil an nichtfixiertem Farbstoff lassen sich infolge der guten Löslichkeit des Verdickungsmittels kalt bis lauwarm leicht und schnell vom Gewebe entfernen.

Es resultieren brillante, farbstarke, rubinrote Farbtöne mit guten Wasch-, Wasser- und Reibechtheiten. Der Fixiergrad des Farbstoffs liegt über 98%.

**Patentansprüche**

1. Färbestabile Modifikation des Farbstoffs der Formel

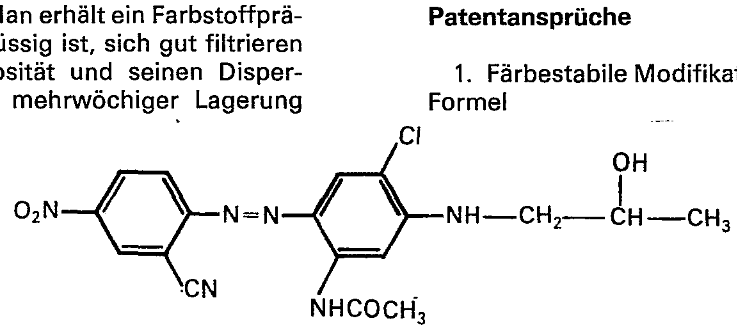

gekennzeichnet durch das in Fig. 1 gezeigte Röntgenbeugungsdiagramm (CuK-α-Strahlung) mit den charakteristischen Reflexen und die aus dem Beugungsbild errechneten d-Werte der Netzebenenabstände:

d [Å]: 11.5 (s), 6.8 (ss), 4.71 (s), 4,17 (s), 3.60 (s), 3.49 (s), 3.44 (ss), 3.34 (ss), 3.21 (s).

2. Verfahren zur Herstellung der färbestabilen α-Modifikation gemäss Patentanspruch 1, dadurch gekennzeichnet, dass man den kristallographisch amorphen Farbstoff der angegebenen Formel in wässriger Suspension während 1 bis 20 Stunden in der Weise auf Temperaturen zwischen 20 und 100°C erhitzt, dass die Farbstoffpartikel nicht schmelzen.

3. Verfahren gemäss Patentanspruch 2, dadurch gekennzeichnet, dass man den amorphen Farbstoff der genannten Formel in wässriger Suspension stufenweise auf 90-100°C erhitzt, mit einem Haltepunkt bei 40-60°C, einer Heizrate von 0,1-1°C pro Minute, einer Verweilzeit am Haltepunkt von 0,5-2 Stunden und 0,5-5 Stunden am Endpunkt.

4. Verfahren gemäss Patentanspruch 3, dadurch gekennzeichnet, dass der Haltepunkt bei 50°C und die Aufheizrate bei 0,4-0,7°C pro Minute liegt.

5. Verfahren gemäss Patentansprüchen 2-4, dadurch gekennzeichnet, dass man direkt von der bei der Herstellung des Farbstoffs anfallenden wässrigen Kupplungssuspension ausgeht.

6. Verwendung der färbestabilen α-Modifikation des Azofarbstoffs gemäss Patentanspruch 1 zur Herstellung von Druckpasten und deren Verwendung zum Färben und Bedrucken von synthetischen oder halbsynthetischen Fasermaterialien.

## Claims

1. A modification of the dye of the formula

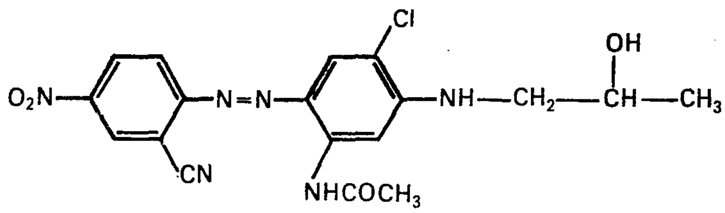

which modification is stable to dyeing and is characterised by the X-ray diffraction pattern (CuK-α-radiation) with the characteristic reflexes shown in Fig. 1, and by the d values of the interplanar spacings, calculated from the diffraction pattern:

d [Å]: 11.5 (s), 6.8 (ss), 4.71 (s), 4,17 (s), 3.60 (s), 3.49 (s), 3.44 (ss), 3.34 (ss), 3.21 (s).

2. A process for producing the α-modification stable to dyeing according to claim 1, which process comprises heating the crystallographically amorphous dye of the given formula in an aqueous suspension for 1 to 20 hours at a temperature of between 20 and 100°C in a manner ensuring that the dye particles do not melt.

3. A process according to claim 2, wherein the amorphous dye of the stated formula is gradually heated to 90-100°C, with a halting point at 40-60°C, and a heating rate of 0.1-1°C per minute, the period of time at the halting point being 0.5-2 hours, and at the final point 0.5-5 hours.

4. A process according to claim 3, wherein the halting point is at 50°C and the heating-up rate is 0.4-0.7°C per minute.

5. A process according to claims 2-4, wherein as starting material there is used directly the aqueous coupling suspension occurring in the production of the amorphous dye.

6. A process for dyeing and printing synthetic or semi-synthetic fibre materials by the use of printing pastes obtained by application of the α-modification of the azo dye according to claim 1, which modification is stable to dyeing.

## Revendications

1. Variété stable à la teinture du colorant de formule

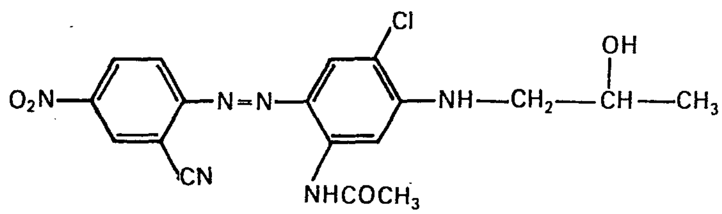

caractérisée par la figure de diffraction aux rayons X (rayonnement CuK-α) présenté sur la figure 1, avec les angles de réflexion caractéristiques et les valeurs d des écartements des plans réticulaires calculées à partir de la figure de diffraction:

d [Å]: 11,5 (s), 6,8 (ss), 4,71 (s), 4,17 (s), 3,60 (s), 3,49 (s), 3,44 (ss), 3,34 (ss), 3,21 (s).

2. Procédé de préparation de la variété α stable à la teinture selon la revendication 1, caractérisé en ce que l'on chauffe pendant 1 à 20 heures en suspension aqueuse entre 20 et 100°C le colorant cristallographiquement amorphe ayant la formule indiquée ci-dessus, de façon que les particules du colorant ne fondent pas.

3. Procédé selon la revendication 2, caractérisé en ce que l'on chauffe progressivement à 90-100°C en suspension aqueuse le colorant amorphe ayant la formule mentionnée ci-dessus, avec un palier à 40-60°C, une vitesse de montée en température de 0,1-1°C/minute, un temps de séjour sur le palier de 0,5-2 heures et 0,5-5 heures au point final.

4. Procédé selon la revendication 3, caractérisé en ce que le palier se trouve à 50°C et que la vitesse de montée en température est de 0,4–0,7°C par minute.

5. Procédé selon l'une quelconque des revendications 2 à 4, caractérisé en ce que l'on part directement de la suspension aqueuse de copulation obtenue lors de la préparation du colorant.

6. Utilisation de la variété α, stable à la teinture, du colorant azoïque selon la revendication 1, pour préparer des pâtes d'impression, et son utilisation pour teindre et imprimer des matériaux en fibres synthétiques ou semi-synthétiques.

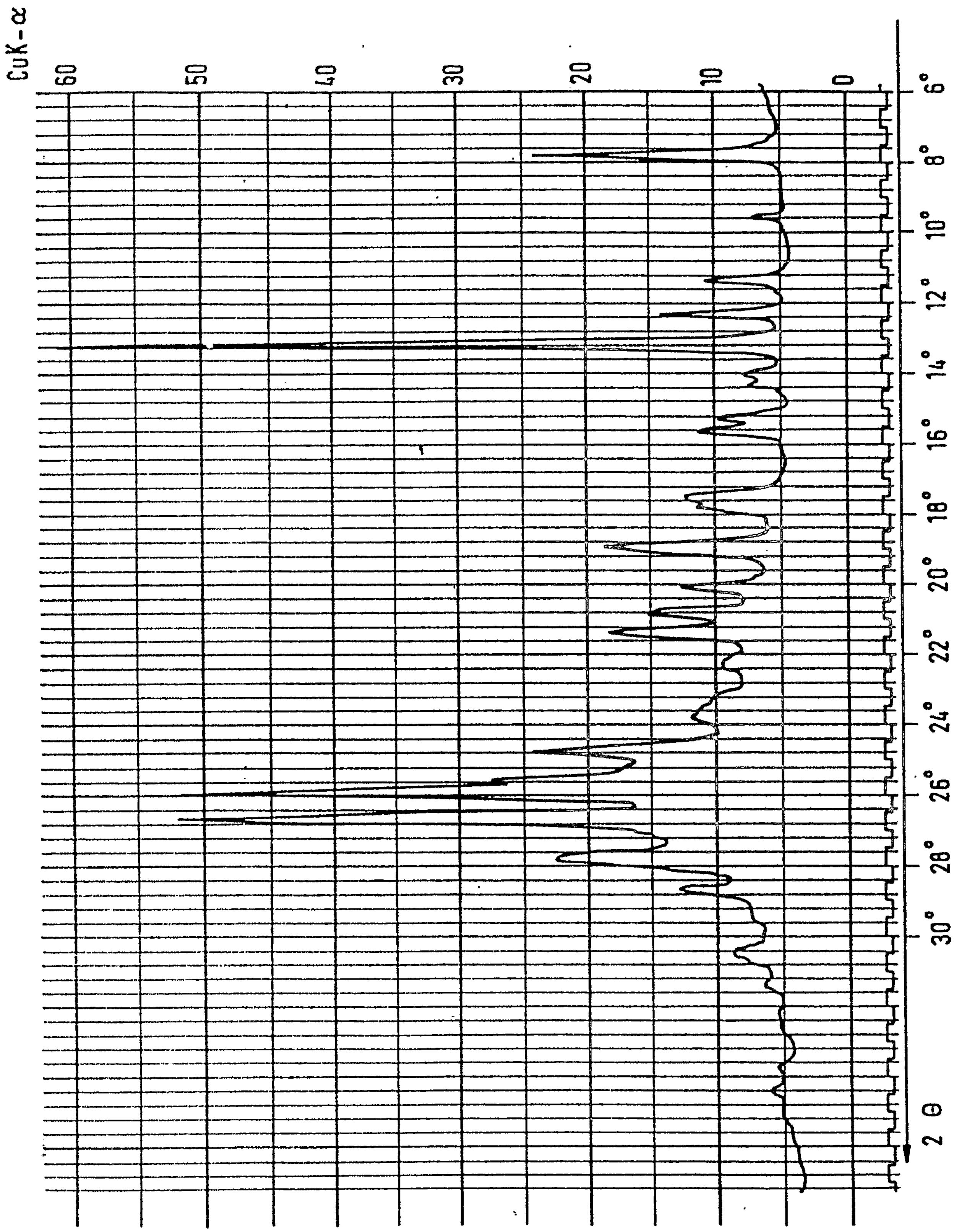
CuK-α
60
50
40
30
20
10
0
6°
8°
10°
12°
14°
16°
18°
20°
22°
24°
26°
28°
30°
2 Θ